# NEW EUROPEAN PATENT SPECIFICATION

(11) **EP 0 321 160 B2**
(45) Date of publication and mention of the opposition decision: **02.08.2000**
(45) Mention of the grant of the patent: 12.05.1993
(21) Application number: 88311706.1
(22) Date of filing: 09.12.1988
(51) Int. Cl.: B29C 45/17, B29C 45/23, B29C 45/28, B29C 67/20

(54) **Injection molding method and nozzle for use therein**
Verfahren zum Spritzgiessen und dafür angewandte Düse
Procédé de moulage par injection et buse utilisée à cet effet

(30) Priority: 16.12.1987 US 133925; 01.12.1988 US 277233
(43) Date of publication of application: 21.06.1989
(73) Proprietor: Melea Limited, Gibraltar (GI)
(72) Inventor: Loren, Norman S., Warren, MI 48091 (US)
(74) Representative: Rehders, Jochen, Dipl.-Ing.

(56) References cited:
- EP-A- 0 127 961
- EP-A- 0 298 631
- EP-B- 0 309 257
- WO-A-89/05226
- DE-A- 2 716 817
- US-A- 2 940 123
- US-A- 3 966 372
- US-A- 4 101 617
- US-A- 4 129 635
- US-A- 4 140 672
- US-A- 4 247 515
- US-A- 4 333 608

## Description

### TECHNICAL FIELD

This invention relates to injection molding methods and nozzles for use therein and, in particular, to injection molding methods and nozzles for use therein wherein hollow-shaped articles as well as structural foam articles can be produced thereby.

### BACKGROUND ART

It is well known in the plastic molding art to use pressurized fluid in conjunction with the injection molding of articles. The pressurized fluid is typically nitrogen gas which is introduced into the molten plastic.

Pressurized fluid serves many purposes. First, it allows the article so formed to have hollow interior portions which result in weight and material savings. Secondly, it minimizes the molded in stresses by eliminating high second stage injection pressure. This also reduces part weight in that the gas is used to fill out the part. Thirdly, the pressurized fluid applies outward pressure to force the plastic against the surfaces of the mold cavity while the article is setting up. This enhances surface quality by eliminating sink marks, especially in areas of the article having thicker plastic sections, such as structural ribs or bosses.

One problem associated with fluid assisted injection molding is that the gas and the plastic are confluent within the injection nozzle. This causes the plastic within the nozzle to become contaminated with the gas. This is highly undesirable since a later injection of plastic into the mold contains contaminated plastic which results in poor quality. In other words, the gas mixes with the molten plastic in the nozzle and the resulting resin affects the quality of the product surface.

One prior art attempt to solve this problem is disclosed in the U.S. Patent to Yasuike et al 4,106,887 which discloses an injection molding nozzle similar to the injection molding nozzle disclosed in the Kataoka 4,140,672 patent. A check valve is disposed within a longitudinally extending fluid passage to prevent the injected material from reversing. The problem with such prior art is insufficient force required to completely close the nozzle, especially when a relatively high viscous plastic is injected by the nozzle.

The U.S. Patent to Friederich 4,101,617 discloses a method for injection molding of hollow-shaped bodies including a nozzle for introducing both gas and molten resin into a mold. A valve is reciprocable within the nozzle to control the flow of gas and molten resin into the mold.

The U.S. Patent to Hendry 4,333,608 discloses an injection molding nozzle, including a shut-off plunger, which is operated by a fluid and which is opened by the flow of plasticized material through the nozzle. A control rod external to the nozzle controls the movement of the shut-off plunger and is adjustable so that the amount of plasticized resin flowing through the nozzle can be controlled.

The U.S. Patent to Kataoka 4,140,672 discloses an injection molding nozzle and method wherein a needle-type nozzle is provided with a central duct for injecting viscous liquid into a mold cavity.

The U.S. Patent to Yasuike et al 3,966,372 discloses a nozzle including an injection cylinder having a movable mandrel contained therein. The mandrel divides the bore of the cylinder into two different chambers. The mandrel has a central passage which extends axially therethrough so that the rear and front chambers are communicated. First and second thermoplastic resins are charged into the nozzle and are consequently injected in a mass into a mold cavity.

The U.S. Patent to Yasuike et al 4,129,635 discloses an injecting cylinder including a nozzle portion. The nozzle portion includes an injecting passage within which is located a gas charging device which, in turn, is provided with a charging nozzle which opens through the injecting passage.

### DISCLOSURE OF THE INVENTION

A specific object of the present invention is to provide an improved method and nozzle for use therein for making at least one article from plastic resin by injection molding wherein the flow of molten resin through the nozzle is controlled by a differential pressure on a piston of the nozzle.

According to the present invention there is provided a method for making an article from at least one plastic resin in an injection molding system including a pressurized gas source, a mold having an injection aperture, an injection nozzle having a nozzle body for establishing a flow path for molten resin through the injection aperture and valve means including a piston and a tip portion operatively associated with the piston to move therewith, the tip portion having a closed position and an open position to communicate the flow of plastic resin from the nozzle body through the injection aperture, the method including the steps of (a) injecting an amount of molten resin sufficient for the preparation of the article by applying a first variable pressure to the piston to cause the tip portion to move to its open position to communicate the flow of plastic resin from the injection nozzle through the injection aperture in the mold; (b) communicating pressurized gas from the gas source to the mold, simultaneously with or after the step of injecting the molten resin to distribute the molten resin over the interior surfaces of the mold whereby a hollow body portion is formed; (c) applying a second variable pressure to the piston to urge the tip portion towards its closed position, the difference in the pressure between the first and second pressures causing the tip portion to move to its closed position, wherein the difference in pressure on the valve means prevents the gas from entering the flow path of the molten resin in the nozzle body; (d) cooling the article to a temperature beneath the softening point of the resin; (e) relieving the pressure within the hollow body portion; and (f) opening the mold to remove the article, wherein the tip portion is connected to the piston to move in tandem with the piston, the first pressure being provided by the resin during the resin injection step to urge the piston and, consequently, the tip portion towards its open position and pressurized gas from the gas source applies at least a portion of the second pressure to urge the piston and, consequently, the tip portion towards its closed position while preventing the fluid from entering the flow path of the molten resin in the nozzle body.

The invention also provides a nozzle for use in a gas-assisted injection molding system including a pressurized gas source, a mold having an injection aperture and an injection molding machine, the nozzle including a nozzle body having means for establishing a flow path for molten resin, a first end of the nozzle body being adapted for resin connection with the mold and a second end thereof being adapted for resin connection with an end of the injection molding machine; valve means for controlling the flow of resin through the nozzle body, the valve means including a piston and a tip portion operatively associated with the piston to move therewith, the valve means being adapted for reciprocating movement between an open position and a closed position, the tip portion communicating the flow of resin through the nozzle body in the open position, said piston having first and second surfaces, the tip portion moving between the open and closed positions by a pressure difference on the valve means to prevent the gas from entering the flow path of the molten resin in the nozzle body wherein the tip portion is connected to the piston to move in tandem with the piston wherein the first surface of the piston is adapted for communication with the resin for application of the first pressure and wherein the second surface of the piston is adapted to be in communication with pressurized gas from the gas source to urge the tip portion towards its closed position while preventing the fluid from entering the flow path of the molten resin in the nozzle body and to maintain the tip portion in the closed position.

The invention may be utilized in a method for making a structural foam article from a foamable resin.

The invention may also be utilized in applications where it is desirable to communicate and/or relieve the gas pressure downstream from the nozzle.

The advantages accruing to the method and nozzle of the present invention are numerous. For example, the invention may be utilized in a multi-nozzle, hot runner manifold system to provide dual but separate paths for controlling the sequential injection of plastic and gas to form a molded article having at least one hollow interior portion. This is particularly advantageous since in many cases the shape or dimension of the molded article is relatively large and best produced by multiple injection points. The use of such multiple injection points also minimizes the requirement of pushing or forcing a molten plastic from a single injection point to the extreme portions of the cavity. The problem with the use of a single nozzle relates to the increase of viscosity in proportion to the distance which the plastic has to travel to the extreme area of the molten cavity.

Furthermore, the gas flow path is quickly isolated from the plastic flow path within the nozzle in a convenient structure. In any event, the gas path is separated from the molten plastic path, thereby avoiding problems attendant when having a common flow path for both the gas and the plastic within a nozzle.

Preferably, the passages for the plastic and the gas are coaxial wherein the respective passages are not confluent. Also, preferably, the valve mechanism for controlling the passage of plastic also has formed therein a secondary passage for the flow of the gas. The valve mechanism preferably includes a counterbalance mechanism which is set to prevent gas entry into the mold until the tip portion of the valve mechanism is closed.

Still preferably, the method and nozzle are useful either in a single nozzle or a multi-nozzle hot runner manifold in which one or more of the nozzles is equipped with the features of the present invention.

The objects, features and advantages of the present invention are readily apparent from the following detailed description of the best mode for carrying out the invention when taken in connection with the following drawings.

### BRIEF DESCRIPTION OF THE DRAWINGS

FIGURE 1 is a schematic view, partially broken away and in cross-section, of a conventional gas-injection molding system including a mold in its open position, a source of pressurized gas and associated control valve and an injection molding machine having a nozzle;

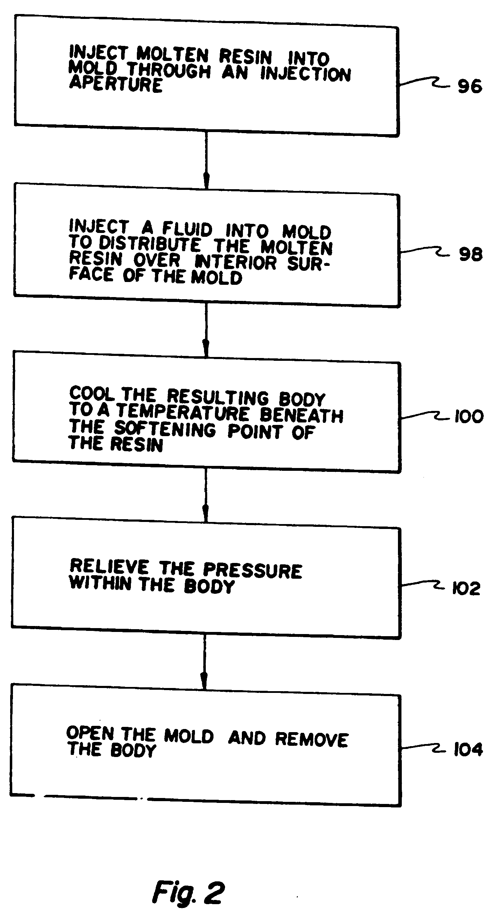

FIGURE 2 is a block diagram illustrating various steps of one embodiment of the method of the present invention;
FIGURE 3 is a side view, partially broken away and in cross-section of a first embodiment of a nozzle of the present invention;
FIGURE 6 is a block diagram illustrating various steps of a second embodiment of the method of the present invention; and
FIGURE 7 is a side view, partially broken away and in cross section, of a counterbalance mechanism for use in a preferred embodiment of the nozzle of the present invention

### BEST MODES FOR CARRYING OUT THE INVENTION

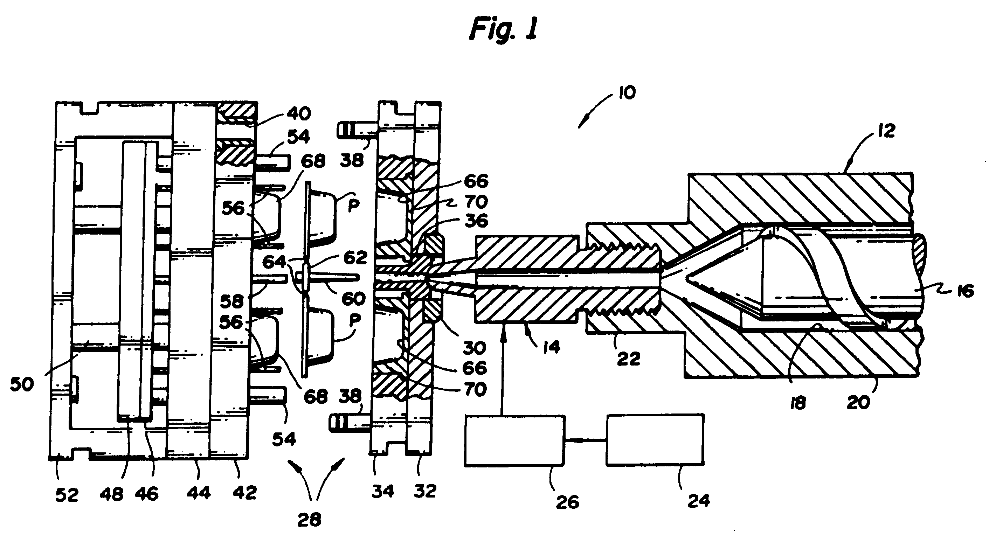

Referring now to FIGURE 1, there is illustrated a conventional gas-assisted injection molding system, generally indicated at 10, for making a plastic article from a plastic resin. A general understanding of the different components of the system 10 is useful in understanding the method and system of the present invention.

Briefly, the injection molding system 10 includes an injection molding machine, generally indicated at 12, having a nozzle, generally indicated at 14, for injection predetermined amounts or shots of molten resin. The injection molding machine 12 includes a hydraulic screw ram 16 which is disposed in a bore 18 formed in a barrel 20 of the injection molding machine 12. The ram 16 plasticizes and advances resin towards the nozzle 14. Upon complete plasticization of the resin, the screw ram 16 is hydraulically advanced towards the end portion 22 of the barrel 20 to inject molten plastic through the nozzle 14 as is well known in the art.

The system 10 also includes a pressurized gas supply 24 which supplies pressurized gas, (i.e. typically nitrogen gas), to the nozzle 14 through a gas control valve or valves 26. The valve 26 controls the flow of pressurized gas from the gas supply 24 in synchronization with the injection of molten plastic from the nozzle 14, as is also well known in the art. It is to be understood that timing and sequence of steps needed to coordinate the plastic injection and the gas communication may be provided by any of a wide variety of structures.

The system 10 further includes a mold or a mold body, generally indicated at 28. As illustrated in FIGURE 1, the mold 28 comprises a two-plate mold body. One of the plates includes a locating ring 30 for locating the injection end of the nozzle 14. The locating ring 30 is mounted on a clamp plate 32 which, in turn, is fixedly connected to a cavity retainer plate or cavity plate 34. A sprue bushing 36 is disposed within the locating ring 30 and is supported by the clamp plate 32.

Leader pins 38 on the cavity plate 34 provide the male half of the male/female connection of the first plate with the second plate of the two-plate mold 28. In particular, the second plate includes leader pin bushings 40 (only one of which is shown) which slidably receive and retain the leader pins 38 therein in the closed position of the mold 28. The leader pin bushings 40 are retained within a core retainer plate 42. The core retainer plate 42 is fixedly connected to a support plate 44 which, in turn, is connected to an ejector retainer plate 46. The ejector retainer plate 46 is connected to an ejector plate 48 which, in turn, is supported by support pillars 50. The support plate 44 is also fixedly connected to the ends of the U-shaped ejector housing 52 to which the support pillars 50 are also connected.

The plate 46 supports a plurality of return pins 54, ejector pins 56 and a sprue puller pin 58 which extend towards the plate 34 and through the plates 42 and 44. The ejector pins 56 are provided for ejecting parts P formed within the mold 28. The sprue puller pin 58 is aligned with the sprue bushing 36.

As illustrated in FIGURE 1, the articles P are interconnected by a sprue 60, a runner 62 and gates 64 which define a resin flow path from the sprue bushing 36 to cavities 66. Opposing surfaces of male and female mold parts 68 and 70, respectively, define the cavities 66. The mold parts 68 are supported on the plate 46 and the mold parts 70 are supported on the cavity retainer plate 34.

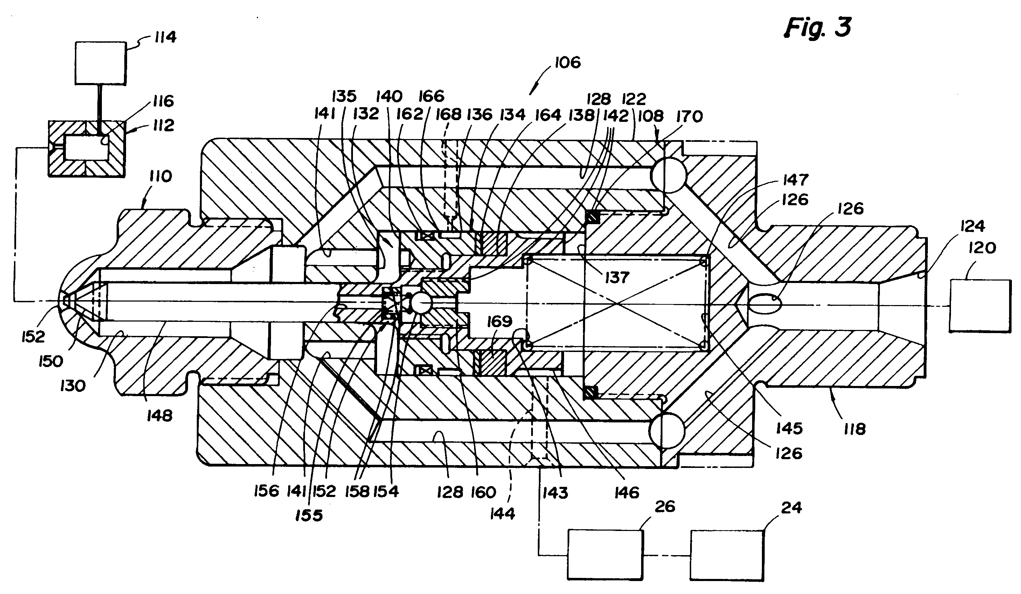

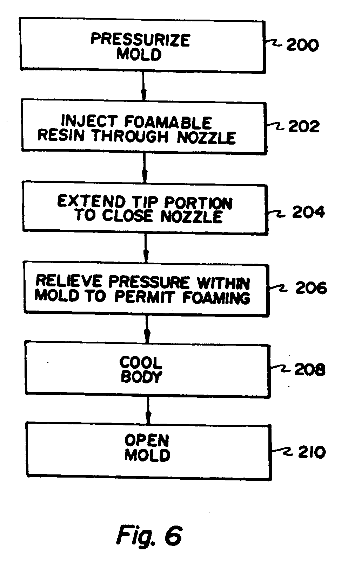

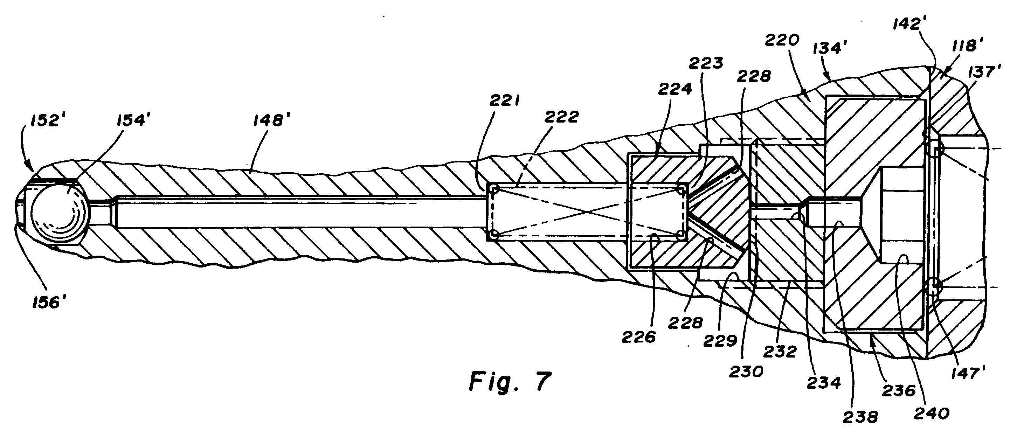

Referring now to FIGURE 3, there is illustrated an embodiment of a nozzle of the present invention. In particular, the nozzle, generally indicated at 106, includes a nozzle body, generally indicated at 108 which, in turn, includes a threaded first end portion, generally indicated at 110. The first end portion 110 is adapted for resin connection with an associated mold, generally indicated at 112. The mold 112 may be prepressurized and/or relieved through a pressure source 114 which is in communication with the mold cavity 116 of the mold 112, the purpose of which will be described in greater detail hereinbelow. However, preferably, the mold 112 is prepressurized through the nozzle 106.

The nozzle body 108 also includes a threaded second end portion 118 which is adapted for resin connection with an end of an associated injection molding machine 120. The first and second end portions 110 and 118, respectively, are threadedly secured to a central portion 122 therebetween to form the nozzle body 108.

The first and second end portions 110 and 118, respectively, and the central portion 122 establish a resin flow path for the molten resin between the injection molding machine 120 and the mold 112. The second end portion 118 includes a central resin aperture 124 which branches off into auxiliary resin apertures 126 within the second end portion 118. The auxiliary resin apertures 126 communicate with respective resin apertures 128 formed in the central portion 122 which, in turn, communicate a second central resin aperture 130 in the first end portion 110.

A valve means or mechanism, generally indicated at 132, is disposed within the nozzle body 108 for controlling the flow of resin through the nozzle body 108. The valve mechanism 132 includes a piston or piston assembly, generally indicated at 134, which is adapted for reciprocating movement within the central portion 122. Even though the rest of the valve mechanism 132 is shown in its closed position for purposes of clarity, the piston assembly 134 is shown in FIGURE 3 at a location substantially midway between surfaces 135 and 137 of the central portion 122 and the second end portion 118, respectively.

The piston assembly 134 includes a first piston part 136 in which there is threadedly secured a second piston part 138. The first piston part 136 has a surface 140 which is in communication with the molten resin via passages 141 extending from the second aperture 130 and through the central portion 122. Likewise, the second piston part 138 has surfaces 142 in communication with the gas supply 24 through the gas control valve 26 and a hole 144 formed radially through the central portion 122 and in communication with an outer circumferential groove 146 formed in the second piston part 138.

The second piston portion 138 has a shoulder portion 143 and the second end portion 118 has a face 145 for receiving and retaining a spring 147 therebetween. The spring 147 biases the piston 134 towards the left as illustrated in FIGURE 3.

The second piston part 138 is integrally formed with a pin 148 having a tip portion 150. The tip portion 150 is movable between the solid and phantom line positions illustrated in FIGURE 3 to alternately open or close a resin orifice 152 formed in the first end portion 110. The first end portion 110 is preferably interchangeable with other end portions to vary the size of the resin orifice.

At the juncture between the pin 148 and the second piston portion 138, there is disposed a check valve, generally indicated at 152, including a ball 154 biased by a spring 155 to control the flow of the gas through a longitudinally extending passage 156 which extends completely through the pin 148. In particular, the ball 154 prevents reverse flow of gas through the pin 148. However, it is to be understood that the check valve 152 may be omitted if it is desired to relieve the pressure within the hollow body portion through the nozzle.

The spring 155 is seated within an apertured ring 158 at one end of thereof and biases the ball 154 at its opposite end. The ball 154 seats against an apertured plug 160 which is threadedly secured within the piston portion 138. The ball 154 allows the flow of the gas through the apertured ring 158 immediately adjacent the aperture 156 after the force of the gas from the gas supply 24 has overcome the biasing action of the spring 155. The force-deflection characteristics of the spring 155 are chosen so that the ball 154 remains seated against the plug 160 while the piston assembly 134 moves the pin 148 to its closed position. Only when the pin 148 is in its closed position does the fluid force unseat the ball 154.

A sealing means or mechanism in the form of various annular backup and sealing rings 162, 164, 169 and 170 are provided for further preventing the communication of the gas and the resin within the nozzle body 108. Furthermore, between the rings 162 and 164 a circumferential groove 166 is formed in the first piston part 136 which is in communication with a bleed hole 168 to bleed off any gas that may bypass the ring 164.

During operation of the nozzle 106 the tip portion 150 moves from its closed position to its open position due to the variable pressure exerted by the molten resin at the surface 140 of the first piston part 136. The molten resin is then allowed to flow through the nozzle 106, through the sprue and into the mold cavity 116. After resin injection, the pin 148 advances to move the tip portion 150 to its closed position under the biasing action of the spring 147 and the gas pressure at the ball 154. After the tip portion 150 is in its closed position, additional pressure exerted by the gas unseats the ball 154 from the plug 160 and the gas flows through the aperture 156 in the pin 148. The gas injection or communication step may be accomplished through a valving arrangement controlled by timers or other process control parameters as is well known in the art.

When the injection of the gas charge is completed, the gas valve 26 is closed and the gas is held in the article within the mold. The check valve 152 prevents the reverse flow of gas through the pin 148. The small surface area of the tip portion 150 relative to the large surface area at the surfaces 142 prevents the opening of the nozzle 106 by any flow of gas to the tip portion 150. In other words, the pressure differential on the valve mechanism 132 ensures that the gas does not contaminate the molten resin in the nozzle body 108.

Finally, the gas is relieved from the mold 112. The gas may be relieved in any number of alternative ways. One possibility is to permit the gas to vent through the path through which it entered. With respect to this possibility, the check valve 152 would not be needed. Alternatively, the gas may be vented within the mold downstream of the tip portion 150.

Referring now to FIGURE 6, there is illustrated in flowchart form the various process steps for making a structural foam body from a foamable resin in an injection molding system which includes the nozzle 106 of FIGURE 3.

In step 200, the mold 112 is pressurized via the pressure source 114.

In step 202, the foamable resin is injected through the nozzle 106.

In step 204, the tip portion 150 is extended to close the nozzle 106.

In step 206, pressure is relieved within the mold 112 to permit foaming of the foamable resin.

In step 208, the body is cooled.

In step 210, the mold is opened and the part is removed.

In addition to the steps outlined in FIGURE 6, fluid (i.e. nitrogen gas) may be injected into the mold 112 under pressure from the nozzle 106 to distribute the molten resin over the interior surfaces of the mold 112. After this step, the resulting pressure from the gas is relieved. The pressure may be relieved in the mold or may be relieved through the hollowed-out pin 148.

Referring now to FIGURE 7, there is illustrated an enlarged form of a counterbalance means or mechanism, generally indicated at 220, which is located within a piston assembly, generally indicated at 134'. In general, the counterbalance mechanism 220 also prevents gas entry into the mold 112 until a tip portion of the valve mechanism 132 is closed.

It is to be understood that the parts of FIGURE 7 having the same or similar functions or construction to the parts illustrated in FIGURE 3 are given the same reference numerals, but have a prime designation.

The piston assembly 134' is integrally formed with a pin 148', having a tip portion (not shown, but which is threadedly secured to the end of the pin 148').

Included within the pin 148' is a check valve, generally indicated at 152', similar to the check valve 152. The check valve 152' includes a ball 154' disposed within the pin 148', adjacent the passage 156' formed in the removable tip portion

The counterbalance mechanism 220 includes a compression spring 222, seated between a shoulder 221 formed in the pin 148' and a shoulder 223 of a spring support, generally indicated at 224, which is located in the pin 148'. The spring support 224 includes an inner cavity 226 which receives the spring 222 and which is at least partially defined by the shoulder 223. The cavity 226 is in gas communication with a second cavity 229 formed in the pin 148' by means of inclined passages 228.

The passages 228 communicate with an exterior surface 230 of the spring support 224 opposite the internal cavity 226. In turn, the exterior surface 230 communicates via passages 234, 238 and 240 with surfaces 142' and 137' of the piston assembly 134' and a second end portion 118' of the nozzle, respectively. The passage 234 is formed in an adjustment plug 232 and is in direct communication with the passage 238 formed in the adjustment plug 232 as well as in a pressure block, generally indicated at 236. Finally, the passage 240 is formed in the pressure block 236 in direct communication with the passage 238.

Both the size of the passage 234 and the strength of the spring 222 determine the pressure at which the gas travels through the passage 156'. For example, the smaller the diameter of the passage 234 and the stronger the spring 222, the higher the pressure. Such high pressure is required for high viscous plastics.

The adjustment plug 232 is adjustably, threadedly secured within the piston assembly 134' to thereby set the spring 222 of the counterbalance mechanism 220 to prevent gas entry into in the mold until the piston tip is seated closed in its forward position. In other words, gas pressure, together with spring 147' applies a pressure at the surface 142' to move the piston assembly 134' and, consequently, the pin 148' to the left until the tip portion of the pin 148' is seated closed. After seating, the gas pressure appearing at the surface 230 of the spring support 224 urges the spring support 234 to the left, thereby allowing the gas to flow through the apertures 234, 238 and 240 through apertures 228, past the spring 222 and through the passage 156' and the pin 148'. The ball 154' operates in the same fashion as the ball 154 in the embodiment of FIGURE 3 by allowing the gas to flow unimpeded to the mold, but preventing the gas from flowing back through the passage 156' - (i.e. the ball 154' operates as a one-way valve).

Again, it is to be understood that the check valve 152' may be omitted if it is desired to at least partially relieve the pressure within the hollow body portion through the nozzle. The counterbalance mechanism 220 permits such relieving to occur at least until the pressure within the hollow body portion reaches an amount such as 2,758 KPa (400 psi), at which pressure the counterbalance mechanism 220 prevents the reverse flow of gas.

The methods and various embodiments of the nozzle of the present invention prevent intermixing of the gas and plastic resin within the nozzle. Consequently, parts having excellent surface finish may be provided by the present invention.

While the best mode for carrying out the invention has herein been described in detail, those familiar with the art to which this invention relates will recognize various alternative designs and embodiments for practicing the present invention as defined by the following claims.

## Claims

1. A method for making an article from at least one plastic resin in an injection molding system including a pressurized gas source (24), a mold (112) having an injection aperture, an injection nozzle (106) having a nozzle body (108) for establishing a flow path for molten resin through the injection aperture and valve means (132) including a piston (134) and a tip portion (150) operatively associated with the piston to move therewith, the tip portion having a closed position and an open position to communicate the flow of plastic resin from the nozzle body through the injection aperture, the method including the steps of: (a) injecting (96) an amount of molten resin sufficient for the preparation of the article by applying a first variable pressure to the piston to cause the tip portion to move to its open position to communicate the flow of plastic resin from the injection nozzle through the injection aperture in the mold; (b) communicating (98) pressurized gas from the gas source to the mold, simultaneously with or after the step of injecting the molten resin to distribute the molten resin over the interior surfaces of the mold whereby a hollow body portion is formed; (c) applying a second variable pressure to the piston to urge the tip portion towards its closed position, the difference in the pressure between the first and second pressures causing the tip portion to move to its closed position, wherein the difference in pressure on the valve means prevents the gas from entering the flow path of the molten resin in the nozzle body; (d) cooling (100) the article to a temperature beneath the softening point of the resin; (e) relieving (102) the pressure within the hollow body portion; and (f) opening (104) the mold to remove the article, characterized by:
the tip portion is connected to the piston to move in tandem with the piston, the first pressure being provided by the resin during the resin injection step to urge the piston and, consequently, the tip portion towards its open position and pressurized gas from the gas source applies at least a portion of the second pressure to urge the piston and, consequently, the tip portion towards its closed position while preventing the fluid from entering the flow path of the molten resin in the nozzle body.

2. The method as claimed in Claim 1 wherein the piston is mounted for reciprocating movement within the nozzle body.

3. The method as claimed in Claim 1 wherein the gas is communicated through the injection aperture.

4. The method as claimed in Claim 3 wherein the gas is communicated through the tip portion.

5. The method as claimed in claim 1 wherein the pressure within the hollow body portion is relieved through the injection aperture.

6. The method as claimed in Claim 1 wherein the gas applies substantially all of the second pressure during step (b).

7. The method as claimed in Claim 1 wherein the pressure within the hollow body portion is at least partially relieved downstream from the nozzle.

8. A nozzle (106) for use in a gas-assisted injection molding system including a pressurized gas source (24), a mold (112) having an injection aperture and an injection molding machine (120), the nozzle including a nozzle body (108) having means (110, 118, 122) for establishing a flow path for molten resin, a first end of the nozzle body being adapted for resin connection with the mold and a second end thereof being adapted for resin connection with an end of the injection molding machine; valve means (132) for controlling the flow of resin through the nozzle body, the valve means including a piston (134) and a tip portion (150) operatively associated with the piston to move therewith, the valve means being adapted for reciprocating movement between an open position and a closed position, the tip portion communicating the flow of resin through the nozzle body in the open position, said piston having first and second surfaces (140, 142), the tip portion moving between the open and closed positions by a pressure difference on the valve means to prevent the gas from entering the flow path of the molten resin in the nozzle body and characterized by:
the tip portion is connected to the piston to move in tandem with the piston wherein the first surface (140) of the piston is adapted for communication with the resin for application of the first pressure and wherein the second surface (142) of the piston is adapted to be in communication with pressurized gas from the gas source to urge the tip portion towards its closed position while preventing the gas from entering the flow path of the molten resin in the nozzle body and to maintain the tip portion in the closed position.

9. The nozzle as claimed in Claim 8 wherein the valve means is housed within the nozzle body.

10. The nozzle as claimed in Claim 8 wherein the piston is mounted for reciprocating movement outside the valve body.

11. The nozzle as claimed in Claim 8 or Claim 9 or Claim 10 wherein the valve means has a gas passage (156) formed therein and open at one end thereof through the tip portion, the gas passage and the tip portion communicating the flow of pressurized gas into the mold.

12. The nozzle as claimed in Claim 9 or Claim 10 wherein said tip portion is operatively associated with the first end of the nozzle body to define a resin orifice of the nozzle.

13. The nozzle as claimed in Claim 8 or Claim 9 or Claim 10 wherein said valve means includes a counterbalance mechanism (220) to prevent gas entry into the mold until the tip portion of the valve mechanism is closed.

14. The nozzle as claimed in Claim 13 wherein said counterbalance mechanism includes spring means (222) for applying a spring force, the spring force being larger than the force required to move the tip portion to its closed position.

15. The method as claimed in Claim 1 wherein the article is a structural foam article made from a foamable resin and wherein the method further comprises the steps of pressurizing (200) the mold to a predetermined pressure prior to step (a) and relieving (206) the pressure within the mold to permit foaming by the resin after step (a).

## Patentansprüche

1. Verfahren zum Herstellen eines Gegenstandes aus wenigstens einem Kunstharz in einem Spritzgießsystem, umfassend eine Druckgasquelle (24), eine Form (112) mit einer Einspritzöffnung, eine Einspritzdüse (106) mit einem Düsenkörper (108) zum Ausbilden eines Strömungskanals für geschmolzenes Harz durch die Einspritzöffnung, und eine Ventileinrichtung (132) mit einem Kolben (134) und einem Spitzenabschnitt (150), welcher mit dem Kolben betriebsmäßig zusammenwirkt und sich mit diesem verstellt, wobei der Spitzenabschnitt eine Schließstellung sowie eine Öffnungsstellung einnehmen kann, um den Strom des Kunstharzes vom Düsenkörper durch die Einspritzöffnung zu leiten, wobei das Verfahren die folgenden Verfahrensschritte umfaßt: (a) Einspritzen (96) einer für die Herstellung des Gegenstandes ausreichenden Menge geschmolzenen Harzes, indem ein erster variabler Druck auf den Kolben aufgebracht wird, so daß sich der Spitzenabschnitt in seine Öffnungsstellung verstellt und der Strom des Kunstharzes von der Einspritzdüse durch die Einspritzöffnung in die Form geleitet wird, (b) Einleiten (98) von Druckgas von der Gasquelle in die Form, und zwar gleichzeitig mit oder nach dem Schritt des Einspritzens von geschmolzenem Harz, um das geschmolzene Harz über die Innenflächen der Form zu verteilen, so daß ein Hohlkörperabschnitt gebildet wird; (c) Aufbringen eines zweiten variablen Druckes auf den Kolben, um den Spitzenabschnitt in Richtung seiner Schließstellung zu verstellen, wobei der Druckunterschied zwischen dem ersten und zweiten Druck bewirkt, daß der Spitzenabschnitt in seine Schließstellung verstellt wird, bei welcher der Druckunterschied auf die Ventilanordnung verhindert, daß Gas in den Strömungskanal für das geschmolzene Harz im Düsenkörper eintritt; (d) Abkühlen (100) des Gegenstandes auf eine Temperatur unterhalb des Punktes, bei welchem das Harz weich wird; (e) Ablassen (102) des Druckes im Hohlkörperabschnitt; und (f) Öffnen (104) der Form zum Entfernen des Gegenstandes, **dadurch** **gekennzeichnet,** daß der Spitzenabschnitt mit dem Kolben so verbunden ist, daß er sich mit dem Kolben gemeinsam bewegt, wobei der erste Druck durch das Harz während des Einspritzschrittes aufgebracht wird und den Kolben und dementsprechend den Spitzenabschnitt in Richtung seiner Offenstellung drückt, und daß das Druckgas von der Druckgasquelle zumindest einen Teil des zweiten Druckes aufbringt, um den Kolben und infolgedessen den Spitzenabschnitt in Richtung seiner Schließstellung zu drücken und damit einen Eintritt des Gases in den Strümungskanal des geschmolzenen Harzes im Düsenkörper zu verhindern.

2. Verfahren nach Anspruch 1, wobei der Kolben hin- und herbeweglich innerhalb des Düsenkörpers angeordnet ist.

3. Verfahren nach Anspruch 1, wobei das Gas durch die Einspritzöffnung geleitet wird

4. Verfahren nach Anspruch 3, wobei das Gas durch den Spitzenabschnitt geleitet wird

5. Verfahren nach Anspruch 1, wobei der Druck im Hohlkörperabschnizt durch die Einspritzöffnung hindurch abgelassen wird

6. Verfahren nach Anspruch 1, wobei das Gas im wesentlichen den gesamten zweiten Druck während des Schrittes (b) aufbringt.

7. Verfahren nach Anspruch 1, wobei der Druck im Hohlkörperabschnitt zumindest zum Teil stromabwärts der Düse abgelassen wird.

8. Düse (106) zur Verwendung in einem gasunterstützten Spritzgießsystem mit einer Druckgasquelle (24), einer Form (112) mit einer Einspritzöffnung, und einer Spritzgießmaschine (120), wobei die Düse einen Düsenkörper (108) mit Mitteln (110, 118, 122) zum Ausbilden eines Strömungskanals für geschmolzenes Harz umfaßt und wobei ein erstes Ende des Düsenkörpers für einen Harzanschluß an die Form und ein zweites Ende desselben für einen Harzanschluß an ein Ende der Spritzgießmaschine ausgebildet ist; ferner eine Ventileinrichtung (132) zum Steuern des Harzstromes durch den Düsenkörper, wobei die Ventileinrichtung einen Kolben (134) und einen Spitzenabschnitt (150) aufweist, welcher mit dem Kolben betriebsmäßig zusammen wirkt und sich mit diesem zusammen verstellt, wobei die Ventileinrichtung ferner eine Hin- und Herbewegung zwischen einer Offenstellung und einer Schließstellung ausführen kann, wobei ferner der Spitzenabschnitt bei der Offenstellung den Harzstrom durch den Düsenkörper leitet, wobei ferner der Kolben erste und zweite Flächen (140, 142) aufweist und wobei der Spitzenabschnitt sich zwischen der Öffnungsstellung und der Schließstellung infolge einer auf die Ventileinrichtung wirkenden Druckdifferenz verstellt, um ein Eintreten von Gas in den Strömungskanal des geschmolzenen Harzes im Düsenkörper zu verhindern, **dadurch gekennzeichnet,** daß der Spitzenabschnitt mit dem Kolben so verbunden ist, daß er sich mit diesem zusammen verstellt, wobei die erste Fläche (140) des Kolbens mit dem Harz zum Aufbringen des ersten Druckes in Verbindung steht und die zweite Fläche (142) des Kolbens so ausgelegt ist, daß sie in Verbindung mit Druckgas von der Gasquelle steht, um den Spitzenabschnitt in Richtung seiner Schließstellung zu verstellen, bei welcher er ein Eintreten von Gas in den Strömungskanal des geschmolzenen Harzes im Düsenkörper verhindert, und um den Spitzenabschnitt in der Schließstellung zu halten.

9. Düse nach Anspruch 8, wobei die Ventileinrichtung innerhalb des Düsenkörpers angeordnet ist.

10. Düse nach Anspruch 8, wobei der Kolben außerhalb des Ventilkörpers hin- und herbeweglich angeordnet ist.

11. Düse nach Anspruch 8, Anspruch 9 oder Anspruch 10, wobei die Ventileinrichtung einen Gaskanal (156) hat, welcher in dieser ausgebildet und an einem seiner Enden über den Spitzenabschnitt geöffnet ist, wobei der Gaskanal und der Spitzenabschnitt den Strom des Druckgases in die Form leiten.

12. Düse nach Anspruch 9 oder Anspruch 10, wobei der Spitzenabschnitt mit dem ersten Ende des Düsenkörpers betriebsmäßig zusammenwirkt und eine Harzöffnung der Düse definiert.

13. Düse nach Anspruch 8, Anspruch 9 oder Anspruch 10, wobei die Ventileinrichtung einen Ausgleichsmechanismus (220) umfaßt, um einen Eintritt von Gas in die Form zu verhindern, bis der Spitzenabschnitt des Ventilmechanismus geschlossen ist.

14. Düse nach Anspruch 13, wobei der Ausgleichsmechanismus eine Federanordnung (222) zum Aufbringen einer Federkraft aufweist, wobei die Federkraft größer als die Kraft ist, die zum Verstellen des Spitzenabschnittes in seine Schließstellung erforderlich ist.

15. Verfahren nach Anspruch 1, bei welchem der Gegenstand ein aus einem schäumbaren Harz hergestelltes Schaum-Bauteil ist, wobei das Verfahren ferner die Schritte umfaßt, die Form vor dem Schritt (a) bis zu einem vorgegebenen Druck unter Druck zu setzen (200) und den Druck in der Form nach dem Schritt (a) abzulassen (206), um ein Aufschäumen des Harzes zu ermöglichen.

## Revendications

1. Procédé pour faire un objet à partir d'au moins une résine plastique dans un système de moulage par injection incluant une source de gaz pressurisé (24), un moule (112) comportant une ouverture d'injection, une buse d'injection (106) ayant un corps de buse (108) pour établir une passage pour l'écoulement de la résine fondue à travers l'ouverture d'injection et des moyens de vanne (132) incluant un piston (134) et une partie de tête (150) associée opérativement avec le piston pour se déplacer avec lui, la partie de tête ayant une position fermée et une position ouverte pour faire communiquer l'écoulement de résine plastique à partir du coprs de buse à travers l'ouverture d'injection, le procédé incluant les étapes de: (a) injecter (96) une quantité de résine fondue suffisante pour la préparation de l'objet en appliquant une première pression variable au piston pour entrainer la partie de tête à se déplacer vers sa position ouverte pour faire communiquer l'écoulement de résine plastique à partir de la buse d'injection à travers l'ouverture d'injection dans le moule; (b) de faire communiquer (98) le gaz pressurisé venant de la source de gaz vers le moule, simultanément avec ou après l'étape d'injection de la résine fondue pour distribuer la résine fondue sur les surfaces intérieures du moule, ainsi une partie de corps creuse est façonnée; (c) appliquer une seconde pression variable au piston pour pousser la partie de tête vers sa position fermée, la différence en pression entre les première et seconde pression entrainant la partie de tête à se déplacer vers sa position fermée, dans lequel la différence de pression sur les moyens de vanne évite au gaz d'entrer dans le passage prévu pour l'écoulement de la résine fondue dans le corps de buse; (d) refroidir (100) l'objet à une température au dessous du point de ramollissement de la résine; (e) relâcher (102) la pression à intérieur de la partie creuse du corps; et (f) ouvrir (104) le moule pour enlever l'objet, **caractérisé par** le fait que la partie de tête est connectée au piston pour se déplacer en tandem avec le piston la première pression étant fournie par la résine pendant l'étape d'injection de résine pour pousser le piston et, par conséquent, la partie de tête vers sa position d'ouverture et le gaz pressurisé, à partir de la source de gaz applique au moins une partie de la seconde pression pour pousser le piston et, par conséquent, la partie de tête vers sa position fermée tout en évitant au gaz d'entrer dans le passage pour l'écoulement de la résine fondue dans le corps de buse.

2. Procédé selon la revendication 1 dans lequel le piston est monté pour le mouvement de va - et - vient à l'intérieur du corps de buse.

3. Procédé selon la revendication 1 dans lequel le gaz communique à travers l'ouverture d'injection

4. Procédé selon la revendication 3 dans lequel le gaz communique à travers la partie de tête

5. Procédé selon la revendication 1 dans lequel la pression à l'intérieur de la partie creuse du corps est relâchée à travers l'ouverture d'injection.

6. Procédé selon la revendication 1 dans lequel le gaz applique sensiblement la totalité de la seconde pression pendant l'étape (b).

7. Procédé selon la revendiation 1 dans lequel la pression à l'intérieur de la partie creuse du corps est au moins partiellement relâchée en aval de la buse.

8. Buse (106) pour application dans un système de moulage par injection assisté par gaz incluant une source de fluide pressurisé (24), un moule (112) comportant une ouverture d'injection et une presse d'injection (120), la buse incluant un corps de buse (108) possédant des moyens (110, 118, 122) pour établir un passage pour l'écoulement de résine fondue, une première extrémité du corps de buse étant adaptée pour une connexion de la résine avec le moule et une seconde extrémité de ce corps de buse étant adaptée pour une connexion de la résine avec une extrémité de la presse d'injection; des moyens de vanne (132) pour commander l'écoulement de la résine à travers le corps de buse, les moyens de vanne incluant un piston (134) et une partie de tête (150) associée opérativement avec le piston pour se déplacer avec lui, les moyens de vanne étant adaptés pour un mouvement de va - et - vient entre une piston d'ouverture et une position fermée, la partie de tête faisant communiquer l'écoulement de résine à travers le corps de buse dans la position d'ouverture, ledit piston comportant les première et seconde surfaces (140, 142), la partie de tête se déplaçant entre les positions ouverte et fermée pour une différence de pression sur les moyens de vanne pour éviter au gaz d'entrer dans le passage pour l'écoulement de la résine fondue dans le corps de buse et **caractérisée par** le fait que: la partie de tête est connectée au piston pour se déplacer en tandem ave le piston dans laquelle la première surface (140) du piston est adaptée pour communication avec la résine pour application de la première pression et dans laquelle la seconde surface (142) du piston est adaptée pour être en communication avec le gaz pressurisé venant de la source de gaz pour pousser la partie de tête vers sa position fermée tout en empêchant le gaz de pénétrer dans la passage pour l'écoulement de la résine fondue dans le corps de buse et pour maintenir la partie de tête dans la position fermée.

9. Buse selon la revendication 8 dans laquelle les moyens de vanne sont logés à l'intérieur du corps de buse.

10. Buse selon la revendication 8 dans laquelle le piston est monté par le mouvement de va - et - vient à l'extérieur du corps de vanne.

11. Buse selon la revendication 8 ou la revendication 9 ou la revendication 10 dans laquelle les moyens de vanne possèdent un passage de gaz (156) formé à l'intérieur et s'ouvrent à une extrémité de ceux - ci à travers la partie de tête, le passage de gaz et la partie de tête faisant communiquer l'écoulement du gaz pressurisé dans le moule.

12. Buse selon la revendication 9 ou la revendication 10 dans laquelle ladite partie de tête est opérativement associée avec la première extrémité du corps de buse pour définir un orifice d'écoulement de résine de la buse.

13. Buse selon la revendication 8 ou la revendication 9 ou la revendication 10 dans laquelle lesdits moyens de vanne incluent un mécanisme de contrecharge (220) pour empêcher le gaz de pénétrer dans le moule jusqu'à ce que la partie de tête du mécanisme de vanne soit fermée

14. Buse selon la revendication 13 dans laquelle ledit mécanisme de contrecharge inclut des moyens de ressort (222) pour appliquer une force élastique, la force élastique étant supérieure à la force requise pour déplacer la partie de tête vers sa position fermée.

15. Procédé selon la revendication 1 dans lequel l'objet est un objet de mousse à peau intégrée fabriqué à partir d'une résine expansée et dans lequel le procédé comprend de plus les étapes de pressuriser (200) le moule à une pression prédéterminée avant l'étape (a) et de relâchement (206) de la pression à l'intérieur du moule pour permettre l'expansion de la résine après l'étape (a)
